Europäisches Patentamt

European Patent Office

Office européen des brevets

Veröffentlichungsnummer: **0 272 614**

**A2**

## EUROPÄISCHE PATENTANMELDUNG

Anmeldenummer: **87118703.5**

Anmeldetag: **16.12.87**

Int. Cl.⁴: **B25J 9/10**

Priorität: **22.12.86 DE 3644016**

Veröffentlichungstag der Anmeldung:
**29.06.88 Patentblatt 88/26**

Benannte Vertragsstaaten:
**DE ES FR GB IT NL SE**

Anmelder: **Behr Industrieanlagen GmbH & Co.
Talstrasse 14 Postfach 40
D-7121 Ingersheim 1(DE)**

Erfinder: **Leininger,Volker, Ing.
Schalensteinweg 9a
CH-2540 Grenchen(CH)**
Erfinder: **Lippuner,Othmar, Ing.
Leimenstrasse 24
CH-2540 Grenchen(CH)**

Vertreter: **Heusler, Wolfgang, Dipl.-Ing. et al
Dr. Dieter von Bezold Dipl.-Ing. Peter Schütz
Dipl.-Ing. Wolfgang Heusler Brienner Strasse
52
D-8000 München 2(DE)**

Einrichtung zum Referenzieren eines Roboters.

Bei einer Robotersteuereinrichtung mit einem mehrdeutigen Positionsindikator für die zu positionierende Roboterachse wird ein sicheres Anfahren einer Referenzposition erreicht, indem die zyklisch auftretenden Abschnitte, innerhalb deren die Positionsanzeige absolut ist, beginnend aus der Referenzposition, beim Durchlaufen gezählt werden. Beim Anfahren der Referenzposition aus einer beliebigen Lage wird solange wieder zurückgezählt, bis der der Referenzposition entsprechende Zählerstand erreicht ist, und erst dann wird das vom Positionsindikator gelieferte Signal gewertet, das dann die genaue Referenzposition angibt.

2. Anordnung der Komponenten im neuen System

Fig.2

EP 0 272 614 A2

## Einrichtung zum Referenzieren eines Roboters

Die Erfindung geht aus von einer Einrichtung zum Referenzieren der Bewegungen eines programmgesteuerten Roboters gemäß dem Oberbegriff des Anspruchs 1.

Beim Programmstart einer Robotersteuereinrichtung muß die Lage des Roboters als bekannt vorausgesetzt werden können. Ist dies nicht der Fall, dann muß der Roboter eine räumlich eindeutig definierte Nullposition anfahren. Der Lagewert einer Roboterachse wird als ein Winkel relativ zu einer Nullposition gemessen. Für die Messung des Winkels kann ein Resolver oder ein optischer Winkelcodierer eingesetzt werden. Die Auflösung liegt hierbei im allgemeinen zwischen 0° und 360° respektive -180° ... 180°. Jedoch ist der Positionswert,der von derartigen Systemen geliefert wird, nicht absolut, sondern nur zyklisch absolut: z.B. wird eine um 370° verdrehte Achse als 10° gemessen. Solche Überdrehungen kommen vor allem bei Handachsen vor. Wenn sie nicht erfaßt werden, kann es vorkommen, daß beim Betrieb oder bei der Nullpunktanfahrt Versorgungsschläuche des auf der Hand montierten Werkzeuges abgerissen werden.

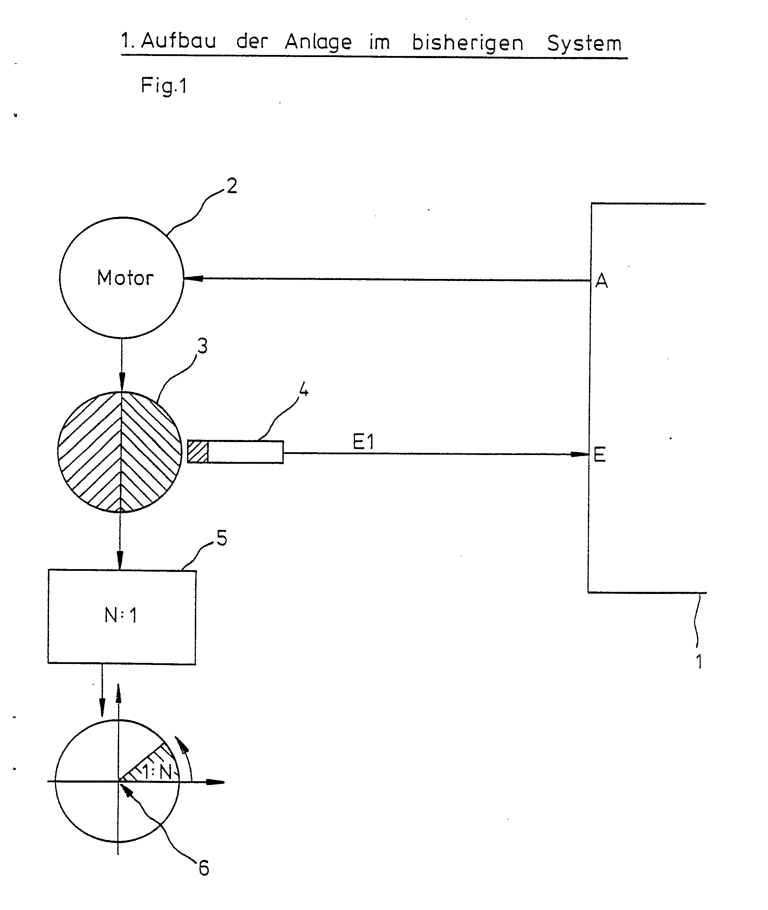

Ferner werden die Winkelmeßsysteme manchmal nicht direkt an die Robotergelenke angeschlossen, sondern über ein Getriebe. Durch die Untersetzung wird die Meßgenauigkeit zwar verbessert, aber auch der Meßbereich wird verkleinert. Eine Untersetzung 12:1 reduziert den Meßbereich zum Beispiel auf 30°. Um beim Einschalten der Robotersteuereinrichtung die Nullposition anzufahren, wird vielfach ein Referenzpunktsensor verwendet, wie er etwa in Fig. 1 veranschaulicht ist: auf der gleichen Achse wie das zyklisch absolute Meßsystem ist ein metallischer Halbkreis angebracht; mit einem metallempfindlichen Sensor kann dann abgetastet werden, ob sich das Metall unter dem Sensor befindet oder nicht, und man erkennt den Zeitpunkt des Wechsels. Der Sensor kann z.B. auch durch eine Scheibe mit unterschiedlich gefärbten Sektoren und eine darauf reagierende Photozelle gebildet werden. Auch andere Sensoren für Winkelpositionen sind brauchbar. Die Ausgangssignale des Sensors sollen der Einfachheit halber mit "EIN" und "AUS" bezeichnet werden. Dann kann mit folgendem Algorithmus eine definierte Nullposition angefahren werden:

```
FALLS SENSOR = EIN
    DANN DREHE ACHSE NACH LINKS BIS
SENSOR = AUS
ANDERNFALLS
    DREHE ACHSE NACH RECHTS BIS SENSOR
= EIN
    UND DREHE ACHSE WIEDER NACH LINKS
BIS SENSOR = AUS.
```

Diese Position ist nun absolut genau innerhalb des Sektors, der von der Meßwertaufnehmerachse bestrichen wird. Übersetzungsverhältnisse der Getriebe und Überdrehungen der Achsen führen aber zu Mehrdeutigkeiten. d.h. die Lage des jeweiligen Sektors auf dem Achskreis ist unbekannt.

Der im Anspruch 1 angegebenen Erfindung liegt die Aufgabe zugrunde, eine Einrichtung zu - schaffen, die auch bei mehrdeutigen Positionsangaben ein eindeutiges Bezugspositionssignal liefert.

Obwohl die Positionsinformation bei vielen bestehenden Robotern nicht eindeutig aus der Mechanik abgeleitet werden kann, liefert die Erfindung nur dann ein Referenzpositionssignal, wenn das betreffende Roboterglied tatsächlich seine Bezugs- oder Referenzlage einnimmt. Zu diesem Zweck wird ausgehend von dieser Bezugsposition die Anzahl der vollen Winkelumdrehungen des Positionsindikators mitgezählt, so daß dessen Nullpositionssignal nur dann als Referenzpositionssignal gewertet wird, wenn der Zähler wieder denjenigen Wert hat, den er anfänglich in der Bezugsposition des Robotergliedes hatte. Dieser Zähler kann beispielsweise als Binärzähler in der Software realisiert sein. Da das Zählen der Sensorübergänge von "AUS" nach "EIN" auch gewährleistet sein muß, wenn die Robotersteuerung vom Netz getrennt ist, werden zweckmäßigerweise derjenige Teil des steuernden Mikroprozessors, der die Software dieses binären Zählers verarbeitet, sowie der Metallsensor mittels einer Batterie gegen Stromunterbrechung gepuffert. Eine Pufferreserve von zwei Monaten hat sich als in der Praxis ausreichend erwiesen, und dies läßt sich bei Auslegung der Systeme für entsprechend niedrigen Stromverbrauch erreichen.

Wenn die Robotersteuereinrichtung wieder eingeschaltet wird, startet die Nullpunkt-Referenzsuche. Die Robotersteuereinrichtung ist erfindungsgemäß nicht mehr wie bisher direkt mit dem Sensor verbunden, sondern über einen Zusatzmodul an das Referenziersystem angeschlossen. Dieser täuscht nun Sensorsignale solcher Art vor, daß die Robotersteuereinrichtung durch Drehbefehle die Roboterachsen in eine eindeutig definierte Position fährt. Dies ist unabhängig von der Position der Roboterachsen vor dem Einschalten der Robotersteuereinrichtung.

Die Erfindung eignet sich nicht nur für Winkelbewegungen ausführende Roboterglieder, sondern auch für die Referenzierung von Linearbewegungen, deren Position nur in zyklischen Abschnitten genau meßbar ist, so daß man zur genauen Referenzierung auch den jeweiligen Abschnitt kennen muß, aus welchem das Roboterglied in die Referenzposition zurückgefahren werden soll. Entsprechend den Winkelabschnitten wären dann beim Herausfahren des Robotergliedes aus der Referenzposition die jeweils durchfahrenen Linearabschnitte mitzuzählen.

Bei einer vorteilhaften Ausgestaltung der Erfindung ist ein Zusatzmodul vorgesehen, welcher zwischen den Positionsindikator und die Robotersteuereinrichtung eingefügt wird und die Zählfunktion übernimmt und an die Robotersteuereinrichtung ein Signal liefert, welches hinsichtlich seines Aufbaus dem vom Positionsindikator gelieferten Signal entspricht, die Referenzposition des betreffenden Robotergliedes aber nur dann anzeigt, wenn diese tatsächlich vorliegt. Es brauchen daher keine Änderungen oder Anpassungen an der Steuereinrichtung selbst vorgenommen zu werden.

Die Erfindung sei nachfolgend anhand eines in den beiliegenden Zeichnungen dargestellten Ausführungsbeispiels näher erläutert. Es zeigen:

Fig. 1 zum Vergleich eine Referenzierung nach dem Stande der Technik;

Fig. 2 eine Referenzierung gemäß der Erfindung und

Fig. 3 einen Vergleich der Ausgangssignale des Positionsindikators mit dem erfindungsgemäß erzeugten Referenzpositionssignal.

In Fig. 1 ist eine Robotersteuereinrichtung 1 zu erkennen, deren Ausgang A ein Motorsignal an einen Motor 2 liefert, durch welches im hier beschriebenen Fall der Motor so eingestellt oder positioniert werden soll, daß das von ihm betätigte Roboterglied, welches hier nicht eigens dargestellt ist, in seine Referenzposition kommt. An die Motorachse ist ein Positionsindikator 3 angeschlossen, der im dargestellten Fall eine zur Hälfte aus Metall und zur anderen Hälfte aus Nichtmetall bestehende Scheibe aufweist, deren Umfang durch einen Metallsensor 4 abgefühlt wird, welcher ein Ausgangssignal E1 an einen Eingang E der Robotersteuereinrichtung liefert. Solange sich Metall unter dem Sensor 4 be findet, liefert dieser als Signal E1 ein Signal EIN, befindet sich kein Metall unter dem Sensor, dann hat sein Ausgangssignal E1 den Zustand AUS. Diese Ausgangssignale gelangen zum Referenzpositionssignaleingang E der Robotersteuereinrichtung 1. Über ein Übersetzungsgetriebe 5 mit dem Übersetzungsfaktor N ist die Roboterachse 6, also die Drehachse des zu referenzierenden Robotergliedes an die Achse des Motors angeschlossen, so daß sich die Motorachse N mal dreht, wenn sich die Roboterachse einmal dreht. Der dem Übersetzungsfaktor N entsprechende Bruchteil der Winkeldrehung der Roboterachse ist schraffiert in einem Winkeldiagramm eingezeichnet. Bei jedem solchen Roboterachsenwinkel 1/N gibt der Sensor 4 ein Signal an den Eingang E ab, so daß über eine volle Umdrehung der Roboterachse am Eingang E N-Nullpunktsignale auftreten, die aber hinsichtlich der tatsächlichen Winkelposition der Roboterachse und damit des an dieser sitzenden Robotergliedes N-deutig sind.

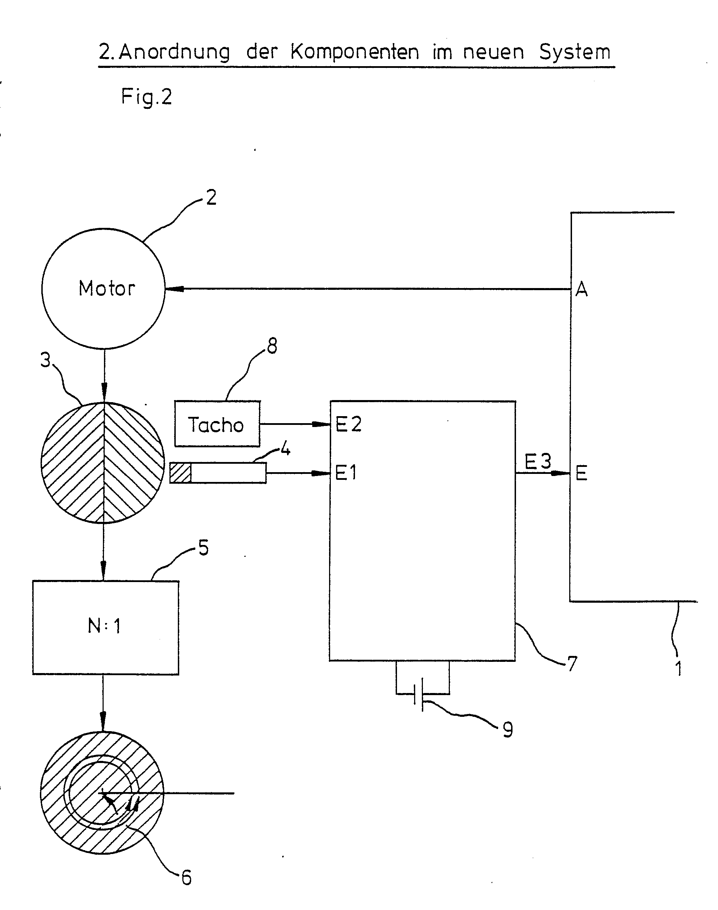

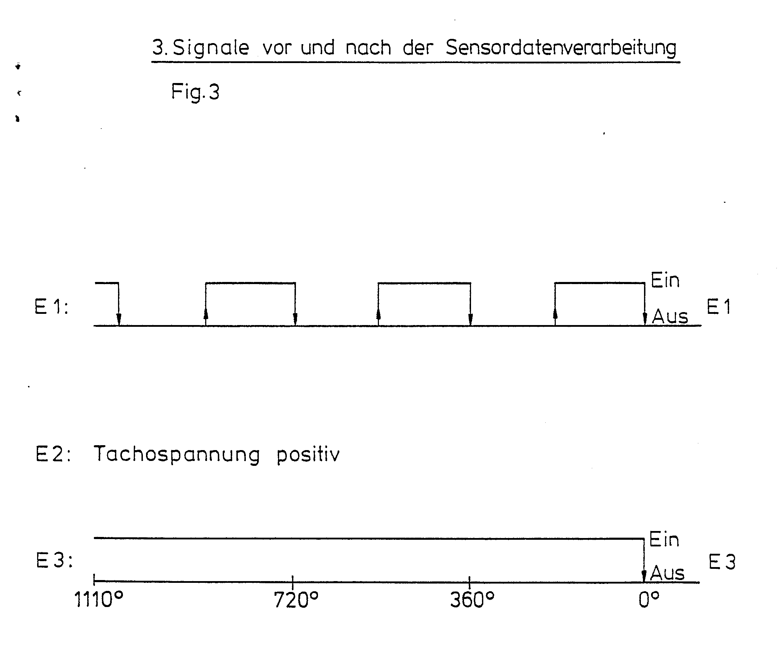

Fig. 2 zeigt die erfindungsgemäße Ergänzung: das Signal E1 des Sensors 4 wird einem in gleicher Weise bezeichneten Eingang einer als Zusatzmodul 7 dargestellten Einheit zugeführt, die außerdem an einem Eingang E2 ein Richtungssignal eines Tachometers 8 erhält, welches die Drehrichtung des Motors 2 und damit die Richtung der Winkelbewegung der Roboterachse 8 anzeigt. Zur Überbrückung von Stromausfällen wird die Elektronik des Zusatzmoduls 7 durch eine Batterie 9 gepuffert. Dieser Zusatzmodul, der jedoch auch von vornherein in die Robotersteuereinrichtung integriert sein kann, liefert an deren Eingang E ein Signal E3, das zusammen mit dem vom Sensor 4 gelieferten Signal E1 in Fig. 3 veranschaulicht ist und das nur dann die Referenzposition der Roboterachse 6 anzeigt, wenn diese tatsächlich eingenommen wird. Die Funktionsweise sei nachfolgend erläutert.

Wie bereits gesagt wurde, kann allein anhand des binären Signals E1 keine eindeutige Referenzpunktfahrt erfolgen. Die Zustandsänderungen des Signals E1 werden deshalb aufsummiert. Zusätzlich wird aus einem Tachosignal E2 die Drehrichtung der Roboterachse bestimmt. Diese Signale werden ständig und dauerhaft erfaßt und nach folgendem Programm ausgewertet:
WENN E1 VON "AUS" AUF "EIN" WECHSELT UND
DIE TACHOSPANNUNG E" POSITIV IST,
DANN ERHÖHE DEN DREHZÄHLER UM EINS,
SONST WENN E1 VON "AUS" AUF "EIN" WECHSELT UND
DIE TACHOSPANNUNG E2 NEGATIV IST,
DANN ERNIEDRIGE DEN DREHZÄHLER UM EINS.

Bei der ersten Inbetriebnahme wird der DREHZÄHLER rückgesetzt.

Die Robotersteuereinrichtung erhält nun nicht mehr wie gemäß Fig. 1 das Signal E1, sondern das neu synthetisierte Signal E3. Die Synthese dieses Signals geschieht folgendermaßen:
WENN DER WERT DES DREHZÄHLERS POSITIV IST,
DANN SETZE E3 IN DEN ZUSTANL "AUS";
SONST WENN DER WERT DES DREHZÄHLERS NEGATIV IST,
DANN SETZE E3 IN DEN ZUSTAND "EIN".

Die Robotersteuereinrichtung kann nun mit dem gleichen Verfahren eine Referenzpunktfahrt durchführen, wie es schon im bisherigen System der Fall war: nur wird anstatt dem Signal E1 das synthetisierte Signal E3 an den Eingang E der Robotersteuereinrichtung gelegt. Auf diese Weise wird sich die Roboterachse dann nicht mehr zyklisch absolut in irgend einem Sektor referenzieren, sondern es wird eine räumlich eindeutige Nullposition angefahren. Dies ist sogar nach mehrfacher Überdrehung einer Achse erreichbar. Dadurch wird ein vollautomatisches Referenzieren möglich.

Der Referenziervorgang dauert nur einige Sekunden. Ohne diese Vorrichtung mußte jede Roboterachse mit einem Bediengerät von Hand in einen bestimmten Winkelsektor gefahren werden. Dies war um so schwieriger, als die Handachsen häufig untereinander verkoppelt sind, also gar nicht einzeln bewegt werden können. Das daraus resultierende Probieren und vorsichtige Herantasten dauerte jedesmal Dutzende von Minuten und führte zu bedeutenden Produktions unterbrechungen.Das neue System kann installiert werden, ohne daß am Robotermeßsystem oder an der Robotersteuereinrichtung eine Änderung gemacht werden muß. Lediglich Kabelverbindungen brauchen geändert zu werden.

Das Signaldiagramm gemäß Fig. 3 zeigt das Ausgangssignal E1 des Sensors 4, welches bei jedem Wechsel zwischen metallischem und nichtmetallischem Sektor der Positionsindikatorscheibe 3 einen Signalsprung aufweist. In diesem Beispiel treten negativ gerichtete Signalsprünge jeweils bei ganzen Vielfachen einer Scheibenumdrehung auf und würden eine Nullposition der Roboterachse 6 signalisieren, während diese tatsächlich an irgendeiner Grenze der mit 1/N bezeichneten schraffierten Abschnitte steht. Dies muß jedoch keineswegs die Referenzposition sein. Das Signal E3 bleibt dagegen bei sämtlichen Signalwechseln des Signals E1 auf dem hohen Signalwert außer dann, wenn die Roboterachse 6 mit dem betreffenden Roboterglied die tatsächliche Referenzposition erreicht hat, die hier mit 0° bezeichnet ist. Das Signal E3 täuscht somit im Vergleich zum Signal E1 solange einen Zustand EIN am Metallsensor 4 vor, bis die wirkliche Referenzposition der Roboterachse erreicht ist. Im Beispiel gemäß Fig. 3 erfolgt die Referenzierung aus einer Überdrehungslage der Roboterachse von 1110°, aus welcher ohne die Erfindung eine Rückdrehung nur um 30° (1110°-3 $\times$ 360°) erfolgen würde, in welcher die Roboterachse aber um drei volle Umdrehungen aus ihrer wahren Referenz-oder Nulllage verdreht ist. Dies wird aber durch die Erfindung vermieden.

## Ansprüche

1) Einrichtung zum Referenzieren von Roboterbewegungen, mit einem mit dem einzustellenden Roboterglied mechanisch gekoppelten Positionsindikator, dessen Nullposition hinsichtlich der Referenzposition des einzustellenden Robotergliedes mehrdeutig ist und der bei jedem Erreichen seiner Nullposition ein Nullpositionssignal liefert, und mit einem Tachometer, der ein die Bewegungsrichtung des Robotergliedes angebendes Tachosignal liefert, **dadurch gekennzeichnet,** daß das Nullpositionssignal (E1) einem Zähleingang einer Zählschaltung (im Modul 7) zugeführt wird, welche die Nullpositionssignale zählt, und daß das Tachometersignal (E2) einem Zählrichtungseingang der Zählschaltung zugeführt wird, derart, daß diese für eine Bewegungsrichtung des Robotergliedes (Roboterachse 6) die Anzahl der Nullpositionssignale zum jeweiligen Zählerstand hinzuzählt, für die andere Bewegungsrichtung dagegen von ihm subtrahiert, wobei der Zähler bei der Referenzposition des Robotergliedes auf einem Referenzzählstand steht und ein Referenzsignal liefert, daß dieses Referenzsignal und die Nullpositionssignale des Tachometers den Eingängen einer Verknüpfungsschaltung (im Modul 7) zugeführt werden, die nur bei gleichzeitigem Vorhandensein dieser beiden Signale ein Referenzpositionssignal (E3) als Anzeige für die Referenzposition des Robotergliedes liefert.

2) Einrichtung nach Anspruch 1, dadurch gekennzeichnet, daß der Positionsindikator (3,4) eine über einen Teil ihres Umfangs eine andere Eigenschaft (z.B. metallisch) als über den anderen Teil (z.B. nicht metallisch) aufweisende rotierende Scheibe (3) und einen am Scheibenumfang angeordneten Sensor (4) enthält, der auf den Unterschied zwischen den verschiedenen Eigenschaften reagiert und dessen Ausgangssignal (E1) sich an der Übergangsstelle als Nullpositionssignal andert, daß die Indikatorscheibe (3) über ein Übersetzungsgetriebe (5) mit einem Winkelantrieb des Rotorgliedes (Rotorachse 6) gekoppelt ist, dessen Referenzposition festgestellt werden soll, daß die Zählschaltung und das Verknüpfungsglied in einem Zusatzmodul (7) enthalten sind, dessen Eingängen die Nullpositionssignale (E1) und das Tachosignal (E2) zugeführt werden und dessen Ausgang mit dem Referenzeingang (E) der Robotersteuereinheit (1) verbunden ist und an diesen ein Signal (E3) liefert, welches auch beim Auftreten von Nullpositionssignalen im tatsächlichen Sensorausgangssignal solange ein scheinbares Sensorsignal ohne Nullpositionssignale vortäuscht (Fig. 3), bis die gewünschte Referenzposition des Robotergliedes tatsächlich erreicht ist.

3) Einrichtung nach Anspruch 2, dadurch gekennzeichnet, daß die Zählschaltung im Programm eines Mikroprozessors der Robotersteuereinrichtung (1) realisiert ist.

4) Einrichtung nach Anspruch 2, dadurch gekennzeichnet, daß der Zusatzmodul (7) an eine Pufferbatterie (9) angeschlossen ist.

5) Einrichtung nach Anspruch 1, dadurch gekennzeichnet, daß der Modul (7) in die Robotersteuereinheit (1) integriert ist.

# 1. Aufbau der Anlage im bisherigen System

Fig.1

## 2. Anordnung der Komponenten im neuen System

### Fig.2

### 3. Signale vor und nach der Sensordatenverarbeitung

Fig. 3

E 1:

$$Ein \quad E1$$
$$Aus$$

E 2: Tachospannung positiv

E 3:

$$Ein \quad E3$$
$$Aus$$

1110°   720°   360°   0°